**Europäisches Patentamt**

**European Patent Office**

**Office européen des brevets**

(19)

(11) Veröffentlichungsnummer: **0 183 015**

**A1**

(12) # EUROPÄISCHE PATENTANMELDUNG

(21) Anmeldenummer: 85112495.8

(22) Anmeldetag: 03.10.85

(51) Int. Cl.⁴: **H 02 H 9/02**
**H 01 F 29/14**

(30) Priorität: 31.10.84 CH 5206/84
31.07.85 CH 3318/85

(43) Veröffentlichungstag der Anmeldung:
04.06.86 Patentblatt 86/23

(84) Benannte Vertragsstaaten:
AT CH DE FR IT LI NL SE

(71) Anmelder: BBC Aktiengesellschaft Brown, Boveri & Cie.
Haselstrasse
CH-5401 Baden(CH)

(72) Erfinder: Maier, Franz, Dr.
Winzerstrasse 42B
CH-5430 Wettingen(CH)

(54) Strombegrenzungsvorrichtung.

(57) Die vorzugsweise in Energieübertragungsnetzen einsetzbare Strombegrenzungsvorrichtung (1) weist einen ferromagnetischen Kern (6) mit einer vom zu überwachenden Strom (I) durchflossenen Drosselspule (26) und einem Magneten (z.B. 17) auf. Der magnetische Fluss ($\emptyset_M$) des Magneten (17) sättigt den ferromagnetischen Kern (6) bei Betriebsströmen. Beim Auftreten von Kurzschlussströmen wird die Sättigung des ferromagnetischen Kerns (6) entgegen der Wirkung des Magneten (17) aufgehoben. Hierdurch wird die Reaktanz der Drosselspule (26) erhöht und damit der Strom begrenzt.

Bei dieser Strombegrenzungsvorrichtung (1) soll eine wirkungsvolle Strombegrenzung erreicht werden, ohne dass der Magnet (z.B. 17) dem Einfluss des magnetischen Feldes der Drosselspule (26) ausgesetzt ist.

Dies wird dadurch erreicht, dass der ferromagnetische Kern (6) einen als geschlossener Ring ausgebildeten Teilkern (24) enthält, und dass der Magnet (z.B 17) in einem ausserhalb des Teilkerns (24) befindlichen Luftspalt eines magnetischen Kreises angeordnet ist, welcher ein vom magnetischen Fluss ($\emptyset_R$) der Drosselspule ((26) durchflutetes Teilstück (Schenkel 9) enthält.

FIG.7

82/85

31.7.85

Ka/eh

- 1 -

## STROMBEGRENZUNGSVORRICHTUNG

Bei der Erfindung wird ausgegangen von einer Vorrichtung zum Begrenzen des von einer Stromquelle zu einem Verbraucher fliessenden Stroms nach dem Oberbegriff von Patentanspruch 1.

Solche Strombegrenzungsvorrichtungen können zur Herabsetzung der Abschaltleistung von Schaltern und zur Begrenzung der Kurzschlusswirkung in elektrischen Energie-übertragungs- und Verteilnetzen eingesetzt werden. Dies ist mit Rücksicht auf die zunehmende Vermaschung der elektrischen Netze im Hinblick auf eine gute Versorgungssicherheit und einen wirtschaftlichen Betrieb und die dadurch bedingte Zunahme der Kurzschlussströme geboten.

Eine Strombegrenzungsvorrichtung der im Oberbegriff von Patentanspruch 1 angegebenen Art ist etwa aus der US-A- 3,671,810 bekannt. Die bekannte Vorrichtung enthält einen ferromagnetischen Kern mit zwei äusseren Schenkeln und einem ein freies Ende aufweisenden mittleren Schenkel. Die beiden äusseren Schenkel tragen jeweils eine von zwei hintereinandergeschalteten und vom Verbraucherstrom durchflossenen Drosselspulen. Der mittlere Schenkel ist mit seinem freien Ende geringfügig von einem Joch beabstandet, durch welches der magnetische Fluss des von den stromdurchflossenen Drosselspulen erzeugten magnetischen Feldes geführt wird. Im Bereich eines zwischen dem freien Ende des mittleren Schenkels und dem Joch befindlichen Spaltes ist ein Permanentmagnet mit einer Remanenz vorgesehen, welche ausreicht, den ferromagnetischen Kern bei Betriebsstrom des Verbrauchers magnetisch zu sättigen.

Da Drosselspulen mit gesättigtem ferromagnetischem Kern nur eine geringe Reaktanz aufweisen, setzt eine solche Strombegrenzungsvorrichtung dem normalen Betriebsstrom lediglich einen kleinen Widerstand entgegen. Bei Auftreten eines Kurzschlussstromes hebt das von den Drosselspulen hervorgerufene magnetische Feld jedoch die Remanenz des Permanentmagneten nahezu vollständig auf, wodurch der ferromagnetische Kern entsättigt wird und die Reaktanz der Drosselspulen ganz erheblich zunimmt. Demzufolge setzt die Strombegrenzungsvorrichtung dem Kurzschlussstrom einen erheblichen Widerstand entgegen und begrenzt ihn.

Bei dieser Strombegrenzungsvorrichtung ist der Permanentmagnet jedoch unmittelbar dem Einfluss des magnetischen Feldes der Drosselspulen ausgesetzt. Er bewirkt infolge seiner mit Luft vergleichbar geringen Permeabilität ($\mu_r = 1$) eine Scherung und somit eine massgebliche Herabsetzung der Permeabilität des ferromagnetischen Kerns für den Spulenfluss. Wäre der zu begrenzende Strom ein Wechselstrom, so befände sich der Permanentmagnet im magnetischen Wechselfeld der Drosselspulen, in welchem er entmagnetisiert werden würde.

Es ist Aufgabe der Erfindung, eine Strombegrenzungsvorrichtung der gattungsgemässen Art anzugeben, welche in einfacher und wirkungsvoller Weise zur Begrenzung
von Strömen beliebiger Grösse geeignet ist.

Die Aufgabe wird in Verbindung mit den Merkmalen des
Oberbegriffs gemäss dem kennzeichnenden Teil des Patentanspruchs 1 gelöst.

Bei der erfindungsgemässen Strombegrenzungsvorrichtung
ist der dem magnetischen Feld der stromdurchflossenen
Drosselspulen entgegenwirkende Magnet im wechselfeldneutralen Bereich des ferromagnetischen Kerns angeordnet.
Hierdurch ist es möglich, die erfindungsgemässe Strombegrenzungsvorrichtung zuverlässig und wartungsfrei zu
betreiben und sie auch in elektrischen Energieübertragungsnetzen mit hohen Speiseleistungen einzusetzen.

Vorteilhafte Weiterbildungen der Erfindung sind in den
abhängigen Ansprüchen angegeben.

Eigenschaften und Vorteile der Erfindung sind nachfolgend
anhand eines in der Zeichnung dargestellten und die
Erfindung nicht beschränkenden Ausführungsbeispiels
näher erläutert.

Hierbei zeigt:

Fig. 1    eine einphasig und stark vereinfacht dargestellte
          Schaltung eines Energieübertragungssystems mit
          einer erfindungsgemässen Strombegrenzungsvorrichtung,

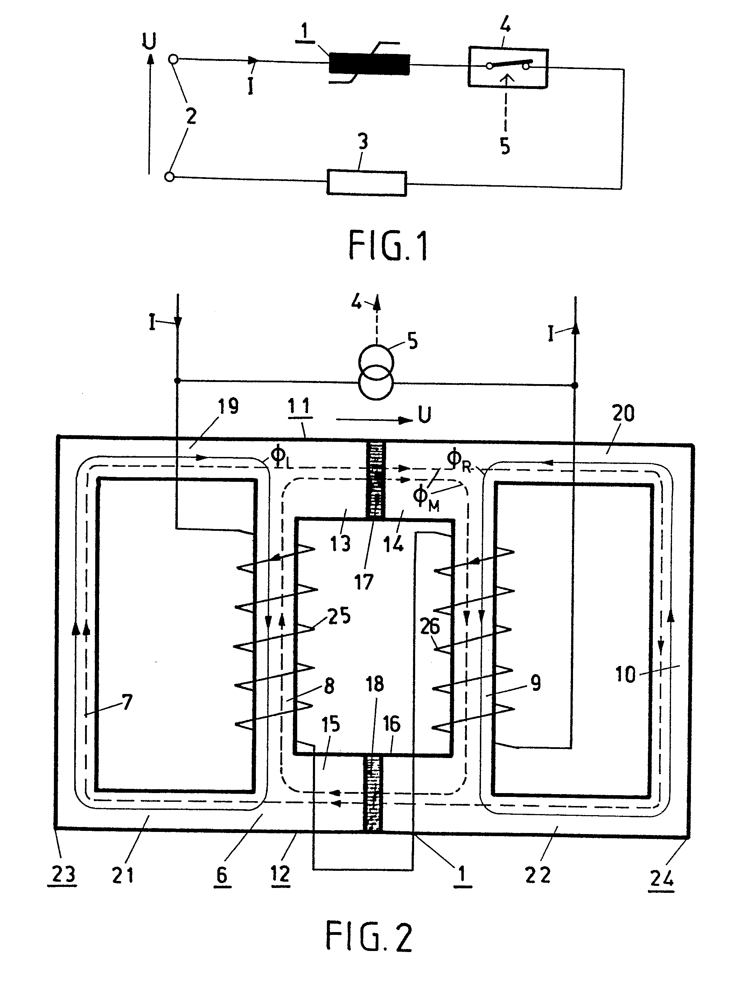

Fig. 2    eine Aufsicht auf eine erste Ausführungsform
          einer vereinfacht und teilweise schematisch
          dargestellten Strombegrenzungsvorrichtung nach
          Fig. 1 mit zwei in Reihe geschalteten Drosselspulen,

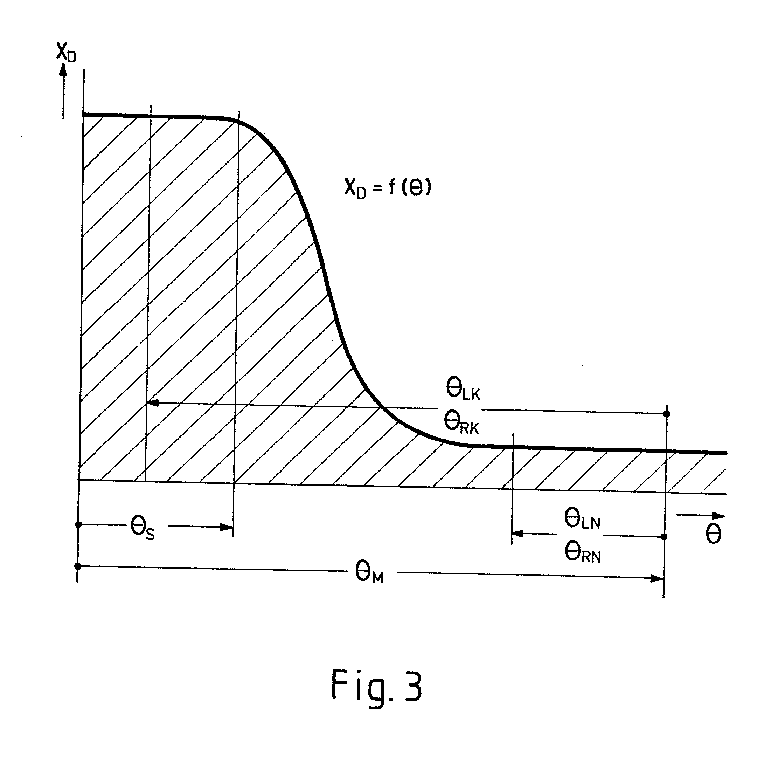

Fig. 3    eine graphische Darstellung der Abhängigkeit
          der Drosselreaktanz $X_D$ der Strombegrenzungsvorrichtung nach Fig. 2 von der Durchflutung der
          Drosselspulen,

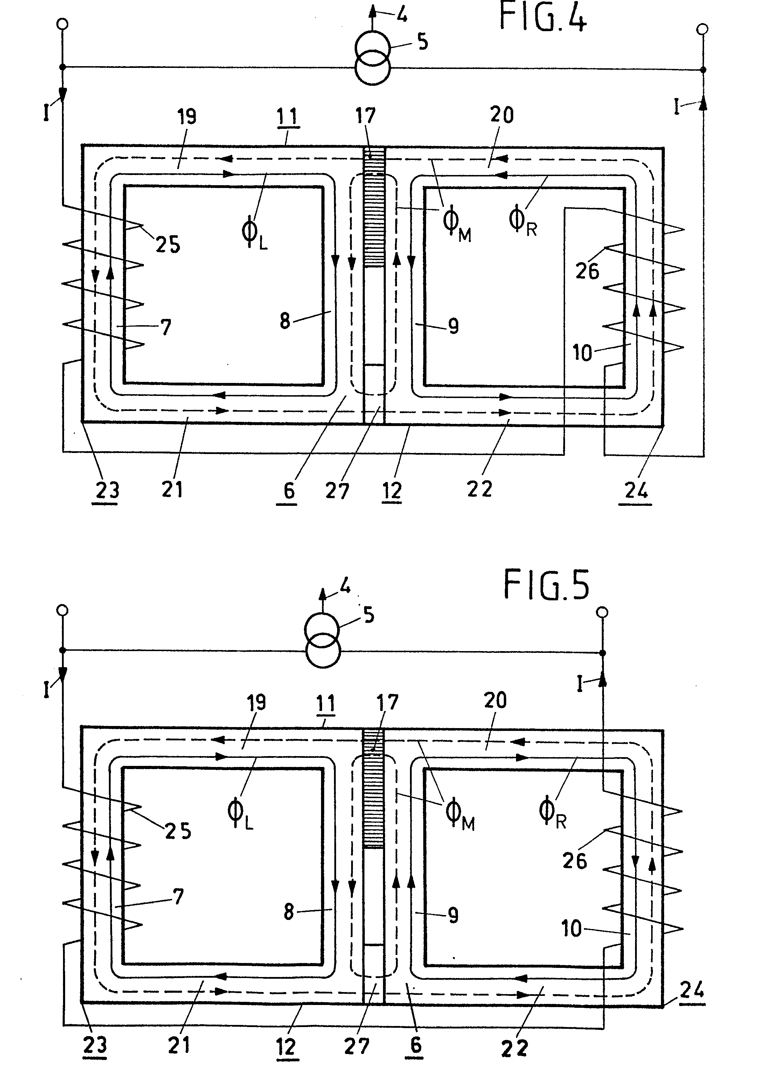

Fig. 4    eine Aufsicht auf eine zweite Ausführungsform
          einer vereinfacht und teilweise schematisch
          dargestellten Strombegrenzungsvorrichtung gemäss
          Fig. 1,

Fig. 5    eine Aufsicht einer dritten Ausführungsform
          einer vereinfacht und teilweise schematisch
          dargestellten Strombegrenzungsvorrichtung gemäss
          Fig. 1,

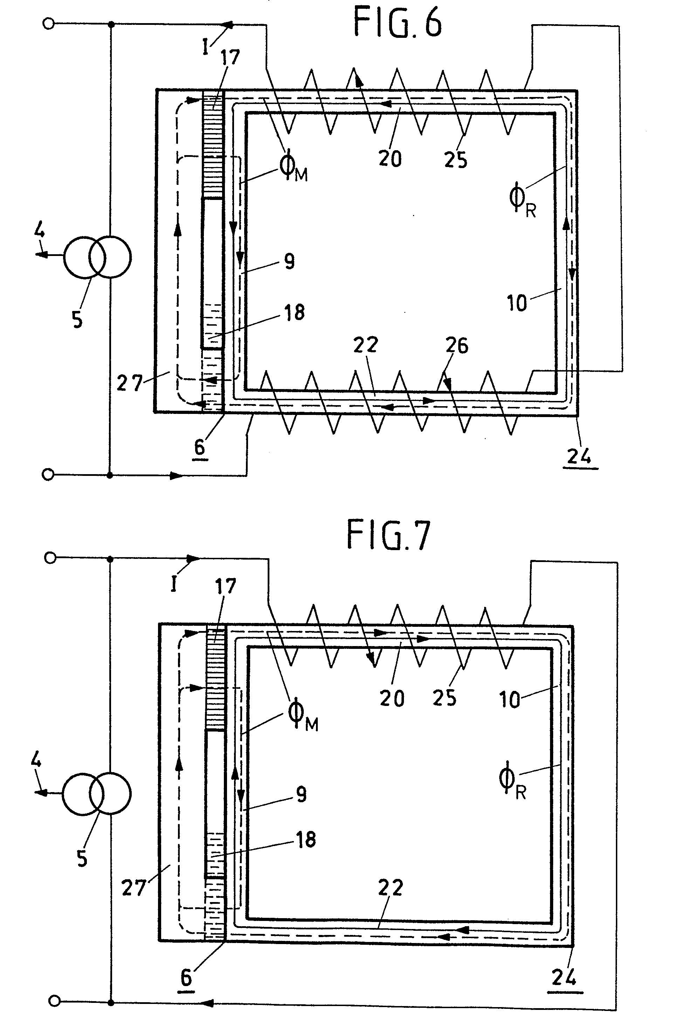

Fig. 6    eine Aufsicht auf eine vierte Ausführungsform
          einer vereinfacht und teilweise schematisch
          dargestellten Strombegrenzungsvorrichtung gemäss
          Fig. 1, und

Fig. 7    eine Aufsicht auf eine fünfte Ausführungsform
          einer vereinfacht und teilweise schematisch
          dargestellten Strombegrenzungsvorrichtung gemäss
          Fig. 1.

In allen Figuren bezeichnen gleiche Bezugszeichen auch
gleichwirkende Teile. Bei der in Fig. 1 angegebenen
Schaltung befindet sich die erfindungsgemässe Strombegrenzungsvorrichtung 1 zwischen einer Wechselstromquelle
2 mit der Spannung U und einem - beispielsweise ohmschen -
Verbraucher 3. Zwischen Strombegrenzungsvorrichtung
1 und Verbraucher 3 befindet sich ein Leistungsschalter 4,
dessen nicht dargestelltes Erregerorgan mit dem Ausgang
eines in Fig. 1 ebenfalls nicht dargestellten Spannungswandlers 5 in Wirkverbindung steht. Die Strombegrenzungsvorrichtung 1 weist bei normalen Betriebsbedingungen gegenüber einem von der Stromquelle 2 zum Verbraucher 3 fliessenden Strom I lediglich eine geringe Impedanz auf. Bei Kurzschlussströmen wirkt sie jedoch mit einer wesentlich höheren Impedanz und begrenzt auf diese Weise die von der Stromquelle 2 zum Verbraucher 3 fliessenden Ströme.

Das aus Fig. 2 ersichtliche Ausführungsbeispiel der erfindungsgemässen Strombegrenzungsvorrichtung 1 enthält einen ferromagnetischen Kern 6 mit vier Schenkeln 7, 8, 9, 10 und zwei inneren Jochen 11 und 12. Die inneren Joche 11 bzw. 12 weisen jeweils zwei voneinander beabstandete Jochabschnitte 13, 14 bzw. 15, 16 mit einander zugewandten freien Enden auf. Zwischen den freien Enden der Jochabschnitte 13 und 14 bzw. 15 und 16 verbleibt jeweils ein beispielsweise einige Zentimeter breiter Spalt, in welchem den Jochquerschnitt füllende Magnete 17 bzw. 18 angeordnet sind. Diese Magnete sind derart angeordnet, dass ihr gestrichelt dargestellter magnetischer Fluss $\emptyset_M$ in den aus dem Magneten 17, dem Jochabschnitt 14, dem Schenkel 9, dem Jochabschnitt 16, dem Magneten 18, dem Jochabschnitt 15, dem Schenkel 8 und dem Jochabschnitt 13 bzw. dem Magneten 17, dem Jochabschnitt 14, einem äusseren Joch 20, dem Schenkel 10, einem äusseren Joch 22, dem Jochabschnitt 16, dem Magneten 18, dem Jochabschnitt 15, einem äusseren Joch 21, dem Schenkel 7, einem äusseren Jochabschnitt 19 und dem Jochabschnitt 13 gebildeten magnetischen Kreise geführt wird. Solche Magnete können beispielsweise Permanentmagnete mit hoher Koerzitivfeldstärke und hoher Remanenz sein, wie beispielsweise Permanentmagnete auf der Basis von Kobalt-Seltene Erde-Legierungen. Es ist aber auch denkbar, anstelle von Permanentmagneten fremdstromerregte Elektromagnete zu verwenden.

Das Joch 19, der Schenkel 8, das Joch 21 und der Schenkel 7 bilden einen ringförmig geschlossenen ferromagnetischen Teilkern 23. Entsprechend bilden das Joch 20, der Schenkel 10, das Joch 22 und der Schenkel 9 einen vom Teilkern 23 durch die Jochabschnitte 13 und 14 sowie 15 und 16 beabstandeten, ringförmig geschlossenen ferromagnetischen Teilkern 24. Auf jedem der Teilkerne 23 bzw. 24 ist jeweils eine vom Strom I durchflossene Drosselspule 25 bzw. 26 angebracht. Diese Drosselspulen sind hintereinander geschaltet und weisen gleiche Windungszahl und gleichen Wicklungssinn auf.

Die Wirkungsweise der erfindungsgemässen Strombegrenzungsvorrichtung ist nun wie folgt:

Die Remanenz beider Magnete 17 und 18 ist derart bemessen, dass die aus ferromagnetischem Material bestehenden und vom magnetischen Fluss $\emptyset_M$ durchsetzten Teilkerne 23 und 24 bei stromlosen oder nur von normalen Betriebsströmen I durchflossenen Drosselspulen 25 und 26 magnetisch gesättigt sind. Die Reaktanz $X_D$ jeder der beiden Drosselspulen 25 bzw. 26 ist dann sehr gering. Dies ist aus Fig. 3 entnehmbar, in welcher Figur die Reaktanz $X_D$ der Drosselspulen in Funktion ihrer Durchflutung θ dargestellt ist. Bei annähernd stromlosen Drosselspulen und daher lediglich von der Durchflutung $θ_M$ der Magnete 17 und 18 beaufschlagten Teilkernen 23 und 24 ist ersichtlich die Reaktanz $X_D$ äusserst gering. Die Reaktanz $X_D$ ist auch gering, wenn die Drosselspulen 25 und 26 mit normalen Betriebsströmen beaufschlagt werden, da je nach Polarität der jeweiligen Halbwelle eines beaufschlagenden Wechselstroms dann jeweils in einer der beiden Drosselspulen zusätzlich höchstens eine dem Scheitelwert des beaufschlagenden Stroms proportionale Durchflutung $θ_{LN}$ und $θ_{RN}$ wirksam wird. Da die Drosselspulen 25 und 26 bei ausreichender magnetischer Sättigung der beiden Teilkerne 23 und 24 eine geringe Reaktanz $X_D$ aufweisen, fällt an der erfindungsgemässen Strombegrenzungsvorrichtung im Normalbetrieb nur eine entsprechend geringe Spannung ab.

Bei Kurzschluss erzeugen die beiden jeweils eine Sättigungsdurchflutung $\theta_S$ aufweisenden Drosselspulen 25 und 26 Durchflutungen $\theta_{LK}$ und $\theta_{RK}$. Diese Durchflutungen sind je nach Stromrichtung der Durchflutung $\theta_M$ der Magnete 17 bzw. 18 entgegengerichtet. Dabei wird die magnetische Sättigung der Teilkerne 23 und 24 stark geschwächt oder sogar aufgehoben. Ist der Strom wie in Fig. 2 angegeben gerichtet, so werden die Schenkel 8, 10 und Joche 20, 22 durch die Spulenflüsse $\emptyset_L$ und $\emptyset_R$ entsättigt. Ist der Strom in der darauffolgenden Halbwelle entgegengesetzt gerichtet, so werden die Schenkel 7, 9 und Joche 19, 21 durch die Spulenflüsse $\emptyset_L$ und $\emptyset_R$ entsättigt. In jedem Fall wird der magnetische Widerstand eines der Teilkerne massgeblich verringert mit der Folge einer Flusszunahme und somit grösseren Wechselspannung $U_D$. Diese Spannung begrenzt den Kurzschlussstrom.

Ein Auslösesignal für den Leistungsschalter 4 kann über den Spannungswandler 5 oberhalb eines vorgegebenen Grenzwertes gebildet werden. Nach Abschaltung des Fehlerstroms ist die beschriebene Strombegrenzungsvorrichtung sofort wieder einsatzbereit.

Beim Ausführungsbeispiel gemäss Fig. 2 sind die Drosselspulen 25 und 26 zwar auf den inneren Schenkeln 8 und 9 angebracht, es ist aber auch möglich, sie (wie in den Ausführungsbeispielen gemäss der Fig. 4 bzw. 5 angegeben ist) auf den Schenkeln 7 und 10 oder aber auch an den Jochen 19, 20, 21 und 22 anzubringen.

Darüber hinaus ist es wie in den Ausführungsbeispielen gemäss den Fig. 4 bzw. 5 angegeben ist, auch möglich, lediglich einen einzigen Magneten, z.B. den Magneten
17, zu verwenden. In diesem Fall ist es erforderlich,
den magnetischen Fluss $\emptyset_M$ dieses Magneten über ein Rückflussteil 27 von Teilkern 23 zum Teilkern 24 zu führen.

Bei der Begrenzung eines Wechselstroms ist es wichtig,
dass die durch die magnetische Wirkung des Stromes I
in den Drosselspulen 25 bzw. 26 hervorgerufenen magnetischen Flüsse $\emptyset_L$ bzw. $\emptyset_R$ in den Teilkernen 23 und
24 in bezug auf die Magnete 17 und 18 wie in Fig. 4
angegeben ist, entgegengesetzten Richtungssinn aufweisen,
da dann die Magnete 17 und 18 im wesentlichen dem entmagnetisierenden Einfluss der Magnetfelder der Drosselspulen 25 und 26 entzogen sind. Dieser entgegengesetzte
Richtungssinn der magnetischen Flüsse $\emptyset_L$ und $\emptyset_R$ wird
hierbei wie in Fig. 4 dargestellt ist, durch gleichsinnige
Spulendurchflutungen erzeugt. Ein besonders guter Schutz
vor der entmagnetisierenden Wirkung der magnetischen
Felder der Droselspulen 25 und 26 wird dann erreicht,
wenn der ferromagnetische Kern 6 hinsichtlich der beiden
Teilkerne 23 und 24 symmetrisch ausgebildet ist und
die Drosselspulen 25 und 26 zusätzlich noch an einander
entsprechenden Stellen der Teilkerne 23 und 24, z.B.
an den beiden Schenkeln 8 und 9, angeordnet sind.

Soll ein Gleichstrom begrenzt werden, so können die
Drosselspulen 25 und 26 für ungleichsinnige Durchflutung
entsprechend der Darstellung in Fig. 5 geschaltet werden.

Wie aus den Ausführungsbeispielen gemäss den Figuren
4 und 5 ferner hervorgeht, können die Jochabschnitte
13, 14, 15 und 16 entfallen und kann der Magnet 17 unmittelbar auf die Schenkel 8 und 9 der Teilkerne 23
und 24 wirken. Der Querschnitt A des Magneten 17 senkrecht
zur Flussrichtung sollte hierbei vorzugsweise grösser oder gleich sein dem mit dem Quotienten der Sättigungsinduktion $B_S$ des ferromagnetischen Materials des Kerns 6
und der Remanenzinduktion $B_r$ des Magnetmaterials multiplizierten Querschnitt $A_S$ des zu sättigenden ferromagnetischen Materials des Kerns 6 senkrecht zur Flussrichtung
$(A \nearrow \frac{B_S}{B_r} A_S)$. Hierbei setzt sich bei einer Verzweigung
des magnetischen Flusses $\emptyset_M$ im Kern 6 der Querschnitt
$A_S$ aus den Querschnitten der durchflossenen Zweige zusammen. Beim Ausführungsbeispiel gemäss Fig. 2 wird der
magnetische Fluss $\emptyset_M$ des Magneten 17 hinter dem Jochabschnitt 13 in magnetische Teilflüsse aufgeteilt, welche
durch den Schenkel 8 und das Joch 19 gehen. Der Sättigungsquerschnitt $A_S$ wird dann durch die Summe der Querschnitte
von Schenkel 8 und Joch 19 gebildet.

Wie die Ausführungsbeispiele der erfindungsgemässen
Strombegrenzungsvorrichtung in den Figuren 6 und 7 zeigen,
kann der ferromagnetische Kern 6 lediglich aus dem Teilkern
24 und dem Rückflussteil 27 gebildet sein. Das Rückflussteil 27 kann hierbei mit seinem einen Ende unmittelbar
auf dem Teilkern 24 aufliegen und mit seinem anderen
Ende zusammen mit dem Teilkern 24 einen Luftspalt begrenzen, in dem der Magnet 17 angeordnet ist (ausgezogen
dargestellt). Das Rückflussteil 27 kann aber auch mit
seinen beiden Enden zusammen mit dem Teilkern 24 zwei
Luftspalte begrenzen, in welchen jeweils einer der beiden
Magnete 17 und 18 (gestrichelt dargestellt) angeordnet
ist.

Bei der Strombegrenzungsvorrichtung gemäss Fig. 6 wird
der magnetische Fluss $\emptyset_M$ des Magneten 17 (bzw. der Magnete
17 und 18) in den ringförmig geschlossenen Teilkern
24 eingespeist, verzweigt sich dort und fliesst einerseits
über den Schenkel 9 und andererseits über das Joch 20,
den Schenkel 10 und das Joch 22 zum Rückflussteil 27 und somit wieder zum Magneten 17. Im ringförmig geschlossenen Teilkern 24 überlagern sich die magnetischen Flüsse $\emptyset_M$ des Magneten 17 (bzw. der Magnete 17 und 18) sowie $\emptyset_L$ und $\emptyset_R$ der Drosselspulen 23 und 24.

Aus Fig. 6 ist ersichtlich, dass bei der durch Pfeile markierten Stromrichtung in den Jochen 20 und 22 sowie im Schenkel 10 entgegengesetzt gerichtete magnetische Flüsse $\emptyset_M$ und $\emptyset_L$, $\emptyset_R$ auftreten, wodurch beim Auftreten von Kurzschlussströmen eine Entsättigung des ferromagnetischen Materials in den Jochen 20 und 22 sowie im Schenkel 10 bewirkt wird. Ist die Stromrichtung umgekehrt, so sind die magnetischen Flüsse $\emptyset_M$ und $\emptyset_L$, $\emptyset_R$ im Schenkel 9 einander entgegengesetzt gerichtet, wodurch beim Auftreten von Kurzschlussströmen eine Entsättigung des ferromagnetischen Materials des Schenkels 9 bewirkt wird. In jedem Fall wird unabhängig von der Stromrichtung ein Teilstück des ringförmig geschlossenen Teilkerns 24 entsättigt und somit der magnetische Widerstand des Teilkerns 24 verringert. Hierdurch wird der magnetische Fluss der Drosselspulen 25 und 26 zunehmen. Ueber die Drosselspulen 25 und 26 fällt sodann entsprechend dem grösseren magnetischen Fluss eine grössere Wechselspannung $U_D$ ab, welche den Kurzschlussstrom begrenzt.

Wie aus Fig. 7 ersichtlich, ist es ohne weiteres auch möglich, anstelle zweier (oder noch mehr) Drosselspulen lediglich eine einzige, nämlich die Drosselspule 26 auf dem ringförmig geschlossenen Teilkern 24 anzuordnen. Die Lage dieser Spule ist beliebig und kann statt wie dargestellt auf dem Joch 20 auch auf dem Joch 22 oder dem Schenkel 10 erfolgen. Wichtig ist hierbei vor allem dass der Teilkern 24 ringförmig geschlossen ist und ein Teilstück aufweist, welches Teil des den Magneten 17 (bzw. die Magnete 17 und 18) enthaltenden magnetischen Kreises ist.

PATENTANSPRÜCHE

1. Vorrichtung zum Begrenzen des von einer Stromquelle
   (2) zu einem Verbraucher (3) fliessenden Stroms mit
   - einem mindestens einen ringförmigen Teilkern (z.B.
     24) aufweisenden ferromagnetischen Kern (6),
   - mindestens einem auf den ferromagnetischen Kern
     (6) wirkenden Magneten (z.B. 17) mit einer Stärke,
     welche ausreicht, zumindest den mindestens einen
     Teilkern (z.B. 24) magnetisch zu sättigen,
   - mindestens einer auf dem mindestens einen Teilkern
     (z.B. 24) angebrachten und zwischen Stromquelle
     (2) und Verbraucher (3) geschalteten Drosselspule
     (z.B. 26) mit einer Windungszahl, welche ausreicht,
     bei Auftreten eines Kurzschlussstromes die magnetische
     Sättigung in einem Teil des mindestens einen Teilkerns (z.B. 24) gegen die magnetische Kraft des
     mindestens einen Magneten (z.B. 17) aufzuheben,
   dadurch gekennzeichnet,
   - dass der mindestens eine Teilkern (z.B. 24) als
     geschlossener Ring ausgebildet ist, und
   - dass der mindestens eine Magnet (z.B. 17) in einem
     ausserhalb des mindestens einen Teilkerns (z.B. 24)
     befindlichen Luftspalt eines magnetischen Kreises
     angeordnet ist, welcher zumindest ein vom magneti-
     schen Fluss (z.B. $\emptyset_R$) der mindestens einen Drosselspule (z.B. 26) durchflutetes Teilstück des mindestens einen Teilkerns (z.B. 24) enthält.

2. Vorrichtung nach Anspruch 1, dadurch gekennzeichnet,
   - dass der ferromagnetische Kern (6) von mindestens
     einemTeilkern (z.B. 24) und einem Rückflussteil
     (27) gebildet ist, und
   - dass der mindestens eine Magnet (z.B. 17) zwischen
     dem mindestens einen Teilkern (z.B. 24) und dem
     Rückflussteil (27) angeordnet ist.

3. Vorrichtung nach Anspruch 2, dadurch gekennzeichnet,
   - dass zwischen dem mindestens einen Teilkern (z.B.
     24) und dem Rückflussteil (27) zwei an je einem
     Ende des Rückflussteils (27) befindliche Magnete
     (17, 18) angeordnet sind.

4. Vorrichtung nach Anspruch 1, dadurch gekennzeichnet,
   - dass der ferromagnetische Kern (6) von mindestens
     zwei Teilkernen (23, 24) gebildet ist, und
   - dass der mindestens eine Magnet (z.B. 17) zwischen
     den mindestens zwei Teilkernen (z.B. 23, 24) angeordnet ist.

5. Vorrichtung nach einem der Ansprüche 1 bis 4, dadurch
   gekennzeichnet,
   - dass der Querschnitt des mindestens einen Magneten
     (z.B. 17) senkrecht zur Richtung seines magnetischen
     Flusses ($\emptyset_M$) grösser oder gleich ist dem mit dem
     Quotienten der Sättigungsinduktion $B_S$ des ferromagnetischen Materials des Kerns (6) und der Remanenz-
     induktion $B_r$ des Magnetmaterials multiplizierten
     Querschnitt $A_S$ des zu sättigenden ferromagnetischen
     Materials des Kerns (6) senkrecht zur Richtung
     des magnetischen Flusses (z.B. $\emptyset_R$) der mindestens
     einen Drosselspule (z.B. 26).

6. Vorrichtung nach einem der Ansprüche 4 bis 5, bei
   der der ferromagnetische Kern aus Jochen (19, 20,
   21, 22) und zwischen diesen Jochen angeordneten Schenkeln (7, 8, 9, 10) gebildet ist, dadurch gekennzeichnet,
   - dass der Kern (6) vier Schenkel (7, 8, 9, 10) und
     vier Joche (19, 20, 21, 22) aufweist,
   - von denen jeweils ein äusserer und ein innerer
     Schenkel (z.B. 7, 8) sowie jeweils zwei (z.B. 19, 21)
     der vier Joche jeweils einen der beiden Teilkerne
     (z.B. 23) bilden, und

- dass der mindestens eine Magnet (z.B. 17) an den beiden inneren Schenkeln (8, 9) der zwei Teilkerne (23, 24) anliegt.

7. Vorrichtung nach Anspruch 6, dadurch gekennzeichnet,
   - dass an den inneren Schenkeln (8, 9) der zwei Teilkerne (23, 24) jeweils mindestens einer von mindestens zwei Jochabschnitten (z. B. 13, 14) angeordnet ist, zwischen deren freien Enden sich der mindestens eine Magnet (z.B. 17) befindet.

8. Vorrichtung nach Anspruch 7, dadurch gekennzeichnet,
   - dass an den inneren Schenkeln (8, 9) der zwei Teilkerne (23, 24) jeweils einer von zwei weiteren Jochabschnitten (z.B. 15, 16) angeordnet ist, zwischen deren freien Enden sich der zweite Magnet befindet.

9. Vorrichtung nach einem der Ansprüche 3 bis 8, dadurch gekennzeichnet,
   - dass der ferromagnetische Kern (6) hinsichtlich der beiden Teilkerne (23, 24) symmetrisch ausgebildet ist.

10. Vorrichtung nach Anspruch 9, dadurch gekennzeichnet,
    - dass an einander entsprechenden Stellen beider Teilkerne (23, 24) je eine von zwei Drosselspulen (25, 26) angebracht sind.

FIG.1

FIG.2

Fig. 3

0183015

FIG.4

FIG.5

0183015

## FIG.6

## FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-4 122 385 (OBERBECK) <br> * Figur 10; Spalte 7, Zeilen 24-42 * | 1,2 | H 02 H 9/02 <br> H 01 F 29/14 |
| Y | | 4,9,10 | |
| | --- | | |
| Y | EP-A-0 052 091 (ACEC) <br> * Figur 3; Ansprüche 1,3 * | 4,9,10 | |
| | --- | | |
| Y | US-A-2 866 943 (RINGELMAN) <br> * Figur 5; Spalte 2, Zeilen 10-18 * | 4,9,10 | |
| | --- | | |
| D,A | US-A-3 671 810 (BARNES et al.) <br> * Figuren 12,14; Spalte 5, Zeile 40 - Spalte 6, Zeile 5 * | 1 | |
| | ----- | | RECHERCHIERTE SACHGEBIETE (Int. Cl.4) <br><br> H 02 H <br> H 01 F |

Der vorliegende Recherchenbericht wurde für alle Patentansprüche erstellt.

| Recherchenort <br> DEN HAAG | Abschlußdatum der Recherche <br> 24-01-1986 | Prüfer <br> KOLBE W.H. |
|---|---|---|